# EUROPEAN PATENT APPLICATION

(11) **EP 4 814 815 A1**
(43) Date of publication of application: **30.09.2026**
(21) Application number: 26166830.5
(22) Date of filing: 23.03.2026
(51) Int. Cl.: G06Q 10/02, G06Q 10/0631, G06Q 10/1093, G06Q 50/06

(54) **NOTIFICATION METHOD, NOTIFICATION SYSTEM, AND NON-TRANSITORY COMPUTER- READABLE STORAGE MEDIUM STORING PROGRAM**

(30) Priority: 25.03.2025 JP 2025049489
(71) Applicant: Seiko Epson Corporation, Tokyo 160-8801 (JP)
(72) Inventor: TATSUKAWA, Munemasa, Suwa-shi, 392-8502 (JP)
(74) Representative: Lewis Silkin LLP

(57) **Abstract**

According to an aspect of the present disclosure, there is provided a notification method including acquiring schedule information for reserving a reservation operation performed by a projector at a reservation date and time in future and displaying a notification screen including information obtained by estimating, based on history information indicating a history of a supply state of electric power for driving the projector and the schedule information, a supply state of the electric power at the reservation date and time.

## Description

The present application is based on, and claims priority from JP Application Serial Number 2025-049489, filed March 25, 2025, the disclosure of which is hereby incorporated by reference herein in its entirety.

### BACKGROUND

### 1. Technical Field

The present disclosure relates to a notification method, a notification system, and a non-transitory computer-readable storage medium storing a program.

### 2. Related Art

As disclosed in JP-A-2019-191436, there has been known a projector that is mounted with a schedule function and is automatically turned on at set time.

JP-A-2019-191436 is an example of the related art.

When energization of the projector is periodically interrupted, for example, when a breaker is turned off at night, it is necessary to, while avoiding a time period in which the energization is interrupted, set time when the projector is turned on. However, when the time period in which the energization is interrupted is not grasped, it is likely that the time when the projector is less likely to be energized is set as the time when the projector is turned on.

### SUMMARY

According to an aspect of the present disclosure, there is provided a notification method including: acquiring reservation information for reserving a first operation performed by a power receiving device at first timing in future; and notifying first estimation information obtained by estimating, based on history information indicating a history of a supply state of an electrical parameter for driving the power receiving device and the reservation information, a supply state of the electrical parameter at the first timing.

According to an aspect of the present disclosure, there is provided a notification method including: notifying energization reference information generated based on history information indicating a history of a supply state of an electrical parameter for driving a power receiving device; and acquiring reservation information for reserving a first operation performed by the power receiving device at first timing in future after the energization reference information was notified.

According to an aspect of the present disclosure, there is provided a notification system including: acquiring, from a reservation device, reservation information for reserving a first operation performed by a power receiving device at first timing in future; and notifying, to the reservation device, first estimation information obtained by estimating, based on history information indicating a history of a supply state of an electrical parameter for driving the power receiving device and the reservation information, a supply state of the electrical parameter at the first timing.

According to an aspect of the present disclosure, there is provided a non-transitory computer-readable storage medium storing a program for causing a computer to execute: acquiring reservation information for reserving a first operation performed by a power receiving device at first timing in future; and notifying first estimation information obtained by estimating, based on history information indicating a history of a supply state of an electrical parameter for driving the power receiving device and the reservation information, a supply state of the electrical parameter at the first timing.

### BRIEF DESCRIPTION OF THE DRAWINGS

FIG. 1 is a block diagram illustrating a schematic configuration of a projector.
FIG. 2 is a flowchart illustrating an operation of the projector at the time when supply of electric power to a power supply is started.
FIG. 3 is a flowchart illustrating an operation of the projector at the time when a user sets schedule information.
FIG. 4 is a diagram illustrating a schedule setting screen displayed when the schedule information is set.
FIG. 5 is a diagram illustrating a notification screen displayed when the schedule information is set.
FIG. 6 is a flowchart illustrating an operation of a projector at the time when supply of electric power to a power supply is started in a second embodiment.
FIG. 7 is a diagram illustrating a notification screen displayed when the supply of electric power to the power supply is started in the second embodiment.
FIG. 8 is a flowchart illustrating an operation of a projector at the time when supply of electric power to a power supply is started in a third embodiment.
FIG. 9 is a diagram illustrating a reference image generated by a controller.
FIG. 10 is a diagram illustrating a reference image generated by the controller.
FIG. 11 is a diagram illustrating a reference image generated by the controller.
FIG. 12 is a flowchart illustrating an operation of the projector at the time when a user sets schedule information in the third embodiment.
FIG. 13 is a diagram illustrating a schedule setting screen displayed when the schedule information is set in the third embodiment.
FIG. 14 is a diagram illustrating the schedule setting screen displayed when the schedule information is set in the third embodiment.
FIG. 15 is a diagram illustrating the schedule setting screen displayed when the schedule information is set in the third embodiment.
FIG. 16 is a diagram illustrating a reference image according to a modification.
FIG. 17 is a diagram illustrating a reference image according to a modification.
FIG. 18 is a block diagram illustrating a schematic configuration of a notification system according to a modification.
FIG. 19 is a diagram illustrating a reference image according to a modification.
FIG. 20 is a diagram illustrating a reference image according to a modification.
FIG. 21 is a diagram illustrating a reference image according to a modification.

### DESCRIPTION OF EMBODIMENTS

### 1. First Embodiment

A projector 1 according to a first embodiment is explained with reference to the drawings.

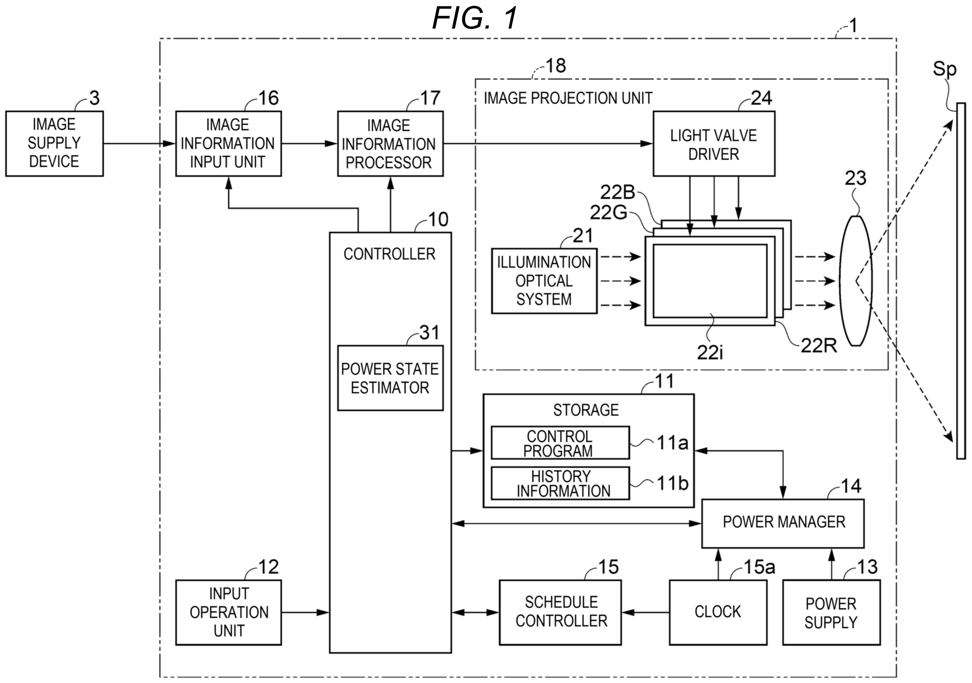

FIG. 1 is a block diagram illustrating a schematic configuration of the projector 1.

As illustrated in FIG. 1, the projector 1 integrally includes a controller 10, a storage 11, an input operation unit 12, a power supply 13, a power manager 14, a schedule controller 15, an image information input unit 16, an image information processor 17, and an image projection unit 18. The projector 1 is an image display device that projects an image onto a projection surface Sp such as a screen or a wall surface from the image projection unit 18 based on image information input to the image information input unit 16. The projector 1 is an example of a power receiving device. The power receiving device in the present specification indicates a device capable of receiving electricity.

The controller 10 includes one or a plurality of processors and comprehensively controls an operation of the projector 1 by operating according to a control program 11a stored in the storage 11. The controller 10 is equivalent to a computer.

The storage 11 includes memories such as a random access memory (RAM) and a read only memory (ROM). The RAM is used to temporarily store various data and the like, and the ROM stores the control program 11a, control data, and the like for controlling the operation of the projector 1. The control program 11a is an example of a program and causes the controller 10, which is a computer, to execute various operations explained below. In the storage 11, history information 11b indicating a history of a supply state of electric power to the projector 1 is stored. The history information 11b is explained below. The electric power is an example of an electrical parameter.

The input operation unit 12 includes a plurality of operation keys for a user to give various instructions to the projector 1. As the operation keys provided in the input operation unit 12, there are a "menu key" for displaying a setting screen for performing various settings, a "direction key" for selecting an item in the setting screen, and a "determination key" for determining the selected item. When the user operates the various operation keys of the input operation unit 12, the operation unit 12 outputs operation signals corresponding to operation contents of the user to the controller 10. A remote controller (not illustrated) capable of performing remote control may be used as the input operation unit 12. In this case, the remote controller transmits an infrared operation signal corresponding to operation content of the user and a not-illustrated remote controller signal receiver receives the operation signal and communicates the operation signal to the controller 10.

Commercial power of AC 100V or the like is supplied to the power supply 13 from the outside via a not-illustrated power supply terminal. The power supply 13 converts the commercial power into DC power having a predetermined voltage and supplies electric power to the units of the projector 1.

The schedule controller 15 includes a processor and a memory. The schedule controller 15 generates various operation requests to the controller 10 according to schedule information stored in the memory or the like. A clock 15a serving as a timing unit that generates date and time information is coupled to the schedule controller 15. The schedule controller 15 always monitors the date and time information input from the clock 15a. When a schedule corresponding to the input date and time information is set, the schedule controller 15 generates an operation request according to the set schedule information and transmits the operation request to the controller 10. The controller 10 controls the operation of the projector 1 based on the received operation request.

The schedule information is information in which information representing an operation that the projector 1 is caused to perform and information representing a date and time when the projector 1 is caused to perform the operation are associated. The schedule information is set by the user. Hereinafter, the operation of the projector 1 set by the user is also referred to as "reservation operation" and the date and time set by the user is also referred to as "reservation date and time". The reservation date and time includes "reservation date" and "reservation time". An operation of the projector 1 at the time when the user sets the schedule information is explained below. The reservation operation is equivalent to a first operation and the reservation date and time, the reservation date, and the reservation time are equivalent to first timing. The first timing is a date and time when and after the user sets the schedule information. In other words, the first timing is future timing when viewed from the date and time when the user sets the schedule information. The schedule information is information for reserving a reservation operation performed by the projector 1 at a future reservation date and time and is equivalent to reservation information.

The power manager 14 includes a processor. The power manager 14 manages a supply state of electric power to the projector 1, that is, a supply state of electric power to the power supply 13, and updates the history information 11b representing the history of the supply state of electric power. In the history information 11b, power supply date and time information representing a date and time when supply of electric power to the power supply 13 was started and power interruption date and time information representing a date and time when the supply of electric power to the power supply 13 was interrupted are cumulatively stored.

Specifically, when supply of electric power to the power supply 13 is started, the power manager 14 acquires date and time information at that time point from the clock 15a as the power supply date and time information. In addition, while electric power is supplied to the power supply 13, the power manager 14 repeats a write operation of acquiring, in every predetermined time, date and time information at that time point from the clock 15a and storing the date and time information in the memory. The predetermined time is, for example, ten seconds. Thereafter, when the supply of electric power to the power supply 13 is interrupted, the write operation by the power manager 14 is stopped. For this reason, after the supply of electric power to the power supply 13 is started next time, the power manager 14 acquires, as the power interruption date and time information, the latest date and time information among a plurality of pieces of date and time information written in the memory. The power manager 14 acquires the power supply date and time information and the power interruption date and time information every time the supply of electric power is started and updates the history information 11b.

The image information input unit 16 is coupled to an external image supply device 3 such as an image reproduction device and receives supply of image information corresponding to a content image from the image supply device 3. The image information input unit 16 can receive, from the controller 10, image information stored in the storage 11 and image information generated by the controller 10. The image information input unit 16 outputs the input image information to the image information processor 17.

The image information processor 17 applies, based on control of the controller 10, various kinds of processing to the image information input from the image information input unit 16 and outputs the image information after the processing to a light valve driver 24 of the image projection unit 18. For example, according to necessity, the image information processor 17 applies, to the image information, processing of correcting the brightness and the tint of an image, processing of correcting distortion of the shape of the image, processing of superimposing an OSD (on-screen display) image such as a setting screen or a notification screen on a content image, and the like.

The image information input unit 16 and the image information processor 17 may include one or a plurality of processors or may include a dedicated processing device such as an application specific integrated circuit (ASIC) or a field programmable gate array (FPGA).

The image projection unit 18 includes an illumination optical system 21, three liquid crystal light valves 22R, 22G, and 22B serving as light modulation devices, a projection optical system 23, and a light valve driver 24. The image projection unit 18 modulates light emitted from the illumination optical system 21 with the liquid crystal light valves 22R, 22G, and 22B to form image light and projects the image light from the projection optical system 23 including at least one of a lens and a mirror to display an image on the projection surface Sp.

The illumination optical system 21 in the present embodiment includes an LD (laser diode) array, which is a solid-state light source. Although detailed explanation and illustration are omitted, for example, the LD array provided in the illumination optical system 21 outputs blue light in a wavelength band equivalent to blue. The LD array outputs, for example, S-polarized blue light. However, a part of the S-polarized blue light is converted into P-polarized blue light by being transmitted through a retarder. Thereafter, the blue light is separated into S-polarized blue light and P-polarized blue light by a polarization separation element and the S-polarized blue light is made incident on a phosphor. The phosphor is excited by the blue light and outputs yellow light in a wavelength band equivalent to yellow. The blue light separated by the polarization separation element is finally combined with the yellow light output from the phosphor and is output to the outside of the illumination optical system 21 as white light including components in a plurality of wavelength bands. The illumination optical system 21 is not limited to the configuration including the LD array as the light source and may include a discharge-type light source lamp such as an ultra-high pressure mercury lamp or a metal halide lamp or another solid-state light source such as a light emitting diode.

The light emitted from the illumination optical system 21 is converted into light having a substantially uniform luminance distribution by a not-illustrated integrator optical system and is separated into color light components of red, green, and blue, which are the three primary colors of light, by a not-illustrated color separation optical system. Thereafter, the color light components are respectively made incident on the liquid crystal light valves 22R, 22G, and 22B.

The liquid crystal light valves 22R, 22G, and 22B respectively include transmissive liquid crystal panels in which liquid crystal is encapsulated between pairs of transparent substrates. In the liquid crystal panels, rectangular pixel regions 22i including pluralities of pixels arrayed in a matrix are formed. A drive voltage can be applied to the liquid crystal for each of the pixels.

The light valve driver 24 forms images in the pixel regions 22i of the liquid crystal light valves 22R, 22G, and 22B. Specifically, the light valve driver 24 applies a drive voltage corresponding to image information input from the image information processor 17 to the pixels in the pixel region 22i and sets the pixels to light transmittance corresponding to the image information. The light emitted from the illumination optical system 21 is modulated for each of the pixels by being transmitted through the pixel regions 22i of the liquid crystal light valves 22R, 22G, and 22B. Image light corresponding to the image information is formed for each of the color lights. The formed color image lights are combined for each of the pixels by a not-illustrated color combination optical system to be image light representing a color image and is enlarged and projected onto the projection surface Sp by the projection optical system 23. As a result, an image based on the image information input to the image information input unit 16 is displayed on the projection surface Sp.

The controller 10 includes a power state estimator 31 as a functional block implemented by the control program 11a. The power state estimator 31 estimates a power supply state at a reservation date and time based on schedule information set by the user and the history information 11b stored in the storage 11. Specifically, the power state estimator 31 calculates a non-energization probability, which is a probability that electric power is not supplied at the reservation date and time, based on the schedule information and the history information 11b. The non-energization probability is an example of an indicator representing a power supply state at the reservation date and time. The controller 10 notifies the non-energization probability calculated by the power state estimator 31 to the user with an OSD image.

Next, an operation of the projector 1 is explained.

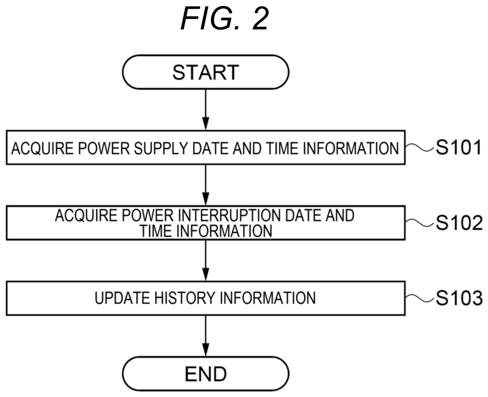

FIG. 2 is a flowchart illustrating an operation of the projector 1 at the time when supply of electric power to the power supply 13 is started. When the supply of electric power to the power supply 13 is started, the projector 1 operates according to a flow illustrated in FIG. 2.

In step S101, the power manager 14 acquires date and time information at that time point from the clock 15a as power supply date and time information. In step S102, the power manager 14 acquires, from the memory, power interruption date and time information representing a date and time when electric power was interrupted last time. In step S103, the power manager 14 updates the history information 11b based on the acquired power supply date and time information and the acquired power interruption date and time information.

Next, an operation of the projector 1 at the time when the user sets schedule information is explained.

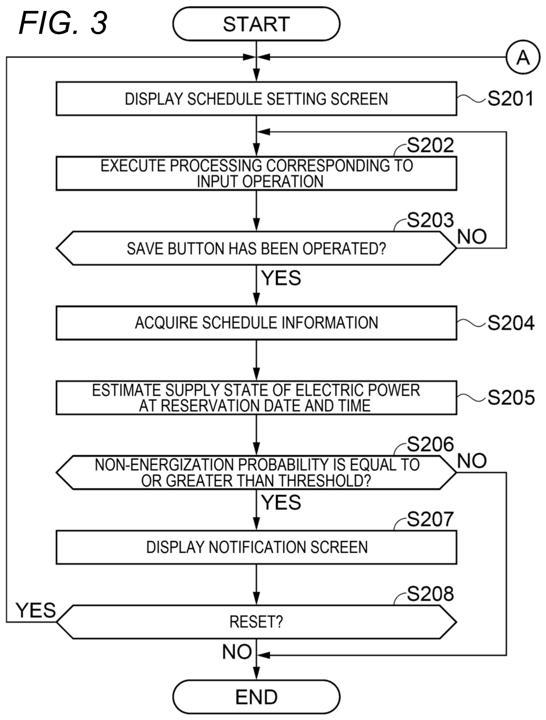

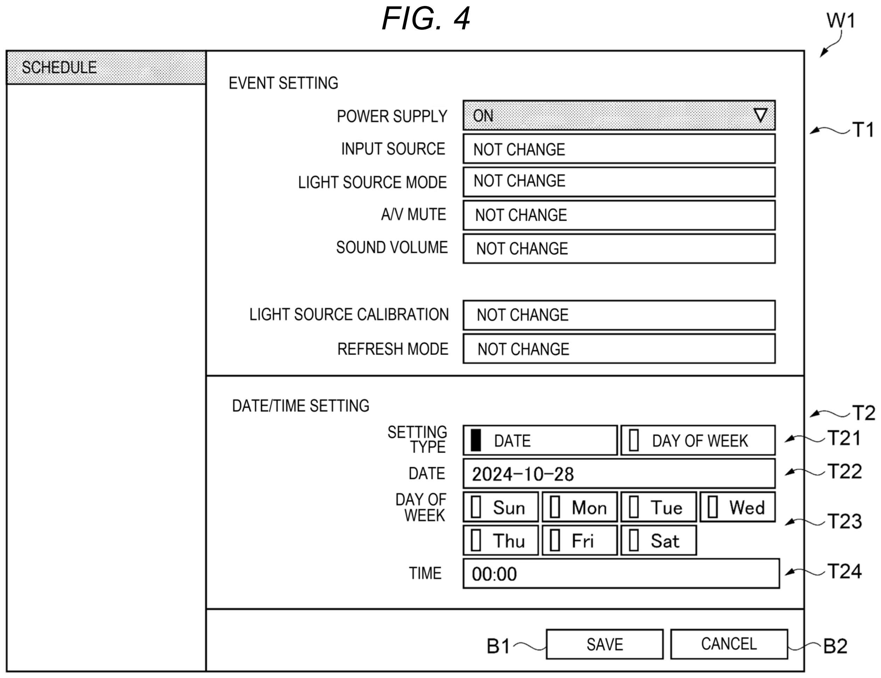

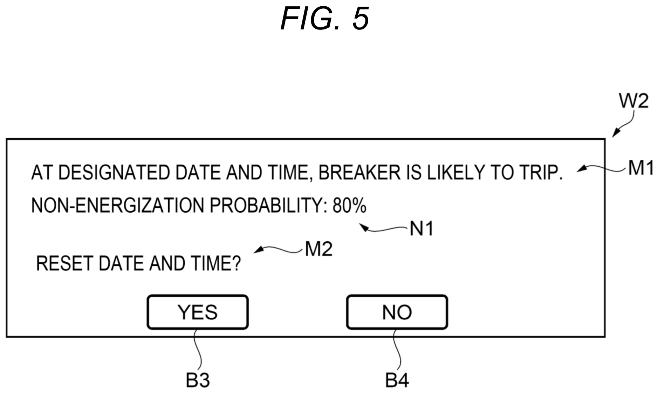

FIG. 3 is a flowchart illustrating the operation of the projector 1 at the time when the user sets schedule information and is a diagram illustrating a notification method of the projector 1. FIG. 4 is a diagram illustrating a schedule setting screen W1 displayed when the schedule information is set. FIG. 5 is a diagram illustrating a notification screen W2 displayed when the schedule information is set. When the user performs operation for setting the schedule information with the input operation unit 12, the controller 10 operates according to a flow illustrated in FIG. 3.

As illustrated in FIG. 3, in step S201, the controller 10 instructs the image information processor 17 to superimpose and display the schedule setting screen W1 as an OSD image. Then, in the subsequent step S202, the controller 10 executes various kinds of processing according to input operation (for example, operation of a direction key and a determination key) performed on the schedule setting screen W1 through the input operation unit 12.

As illustrated in FIG. 4, an event setting section T1, a timing setting section T2, a save button B1, and a cancel button B2 are disposed on the schedule setting screen W1. In the event setting section T1, a predetermined reservation operation for power on/off, light source calibration, and the like can be set. In the timing setting section T2, a reservation date and time when the reservation operation is performed can be set. The user can end the setting after saving the schedule information by operating the save button B1. The user can end the setting without saving the schedule information by operating the cancel button B2.

The timing setting section T2 includes a type selection section T21, a date input section T22, a day of week selection section T23, and a time input section T24. In the type selection section T21, it is possible to select whether to designate a reservation date with a date or to designate the reservation date with a day of the week. When causing the projector 1 to execute the reservation operation only once on a specific day, the user designates the reservation date with a date. When causing the projector 1 to execute the reservation operation on a specific day of the week every week, the user designates the reservation date with a day of the week. When the reservation date is designated with a date, the date is input to the date input section T22. In the day of week selection section T23, when the reservation date is designated with a day of the week, one or a plurality of desired days of the week can be selected. Reservation time is input to the time input section T24 by the user.

Referring back to FIG. 3, in step S203, the controller 10 determines whether the save button B1 has been operated by the user. When the save button B1 has been operated (step S203: YES), the controller 10 shifts the processing to step S204. When the save button B1 has not been operated (step S203: NO), the controller 10 returns the processing to step S202. When the save button B1 has been operated, a dialogue box (not illustrated) for confirmation may be displayed as an OSD image. For example, the dialogue box includes a confirmation message "register a schedule?". In addition, three buttons of "Yes", "No", and "Cancel" are disposed in the dialogue box. Then, when the "Yes" button is operated, the controller 10 shifts the processing to step S204. When the "Cancel" button is operated, the controller 10 returns the processing to step S202. When the "No" button is operated, the controller 10 discards input content up to that point and ends the processing.

When the processing shifts to step S204, the controller 10 acquires schedule information that is based on content set on the schedule setting screen W1 and stores the schedule information in the schedule controller 15. That is, the schedule information is information including a reservation operation and a reservation date and time set on the schedule setting screen W1.

In step S205, the power state estimator 31 estimates a supply state of electric power at the reservation date and time based on the history information 11b and the schedule information. Specifically, the power state estimator 31 calculates a non-energization probability at the reservation date and time based on a supply state of electric power in a predetermined period in the past (for example, half a year) on the same day of the week as the reservation date and time. Here, when the same day of the week as the reservation date and time is set as a target day of the week and the same time as the reservation date and time is set as target time, the non-energization probability can be calculated as a ratio of the number of days when power is not supplied at the target time to the number of target days of the week in the predetermined period. However, when a time in which non-energization is continuous is a short time (for example, less than three hours), it is assumed that the non-energization has temporarily occurred because of movement of equipment, power failure, or the like. For this reason, a day on which target time is included in such a short non-energization time may be regarded as a day on which electric power is supplied or may be excluded from the calculation.

In step S206, the controller 10 determines whether the calculated non-energization probability is equal to or greater than a predetermined threshold. For example, when the calculated non-energization probability is 80% and the threshold set in advance is 50%, that is, when the calculated non-energization probability is equal to or greater than the threshold (step S206: YES), the controller 10 shifts the processing to step S207 and notifies the user. On the other hand, when the calculated non-energization probability is smaller than the threshold (step S206: NO), the controller 10 ends the processing without notifying the user. As explained above, the notification to the user is performed according to whether the calculated non-energization probability is equal to or greater than the predetermined threshold.

When the processing shifts to step S207, the controller 10 notifies the user that the projector 1 is highly likely to be in the non-energized state at the set reservation date and time. Specifically, the controller 10 generates the notification screen W2 illustrated in FIG. 5 and superimposes and displays the notification screen W2 as an OSD image. On the notification screen W2, a message M1 indicating that a breaker is likely to have tripped at the reservation date and time and numerical information N1 indicating a non-energization probability at the reservation date and time are displayed. The message M1 and the numerical information N1 are information indicating an estimation result by the power state estimator 31 and are equivalent to first estimation information obtained by estimating a supply state of electric power. The displaying the notification screen W2 including the message M1 and the numerical information N1 is equivalent to notifying the first estimation information.

Further, the notification screen W2 includes a YES button B3 and a NO button B4 together with a message M2 for inquiring whether to reset the reservation date and time. By operating the YES button B3 or the NO button B4, the user can designate whether to reset the schedule information.

In step S208, the controller 10 determines whether to reset the schedule information. Specifically, the controller 10 determines whether the YES button B3 or the NO button B4 has been operated by the user. When the YES button B3 has been operated by the user (step S208: YES), the controller 10 shifts the processing to step S201 and causes the user to reset the schedule information. On the other hand, when the NO button B4 has been operated by the user (step S208: NO), the controller 10 ends the flow without resetting the schedule information. The user can also set a plurality of pieces of schedule information by repeating the setting of the schedule information.

As explained above, with the projector 1, the notification method, and the control program 11a in the present embodiment, the following effects can be obtained.

According to the present embodiment, the controller 10 acquires the schedule information based on the reservation operation and the reservation date and time set on the schedule setting screen W1. Then, the controller 10 estimates a supply state of electric power at the reservation date and time based on the history information 11b and the schedule information and displays the notification screen W2 indicating an estimation result. Accordingly, since the user can grasp the supply state of electric power to the projector 1 at the reservation date and time, the user can prevent a date and time when the projector 1 is less likely to be energized from being set as the reservation date and time.

According to the present embodiment, the controller 10 calculates the non-energization probability as the indicator indicating the supply state of electric power at the reservation time and the notification screen W2 includes the numerical information N1 corresponding to the non-energization probability. For this reason, the user can easily grasp the supply state of electric power.

According to the present embodiment, the controller 10 displays the notification screen W2 according to whether the indicator indicating the supply state of electric power is equal to or greater than the predetermined threshold. Specifically, the controller 10 displays the notification screen W2 when the non-energization probability is equal to or greater than the threshold. That is, since the notification screen W2 is displayed only when the non-energization probability is equal to or greater than the threshold, it is possible to effectively notify the user that the non-energization probability is equal to or greater than the threshold.

### 2. Second Embodiment

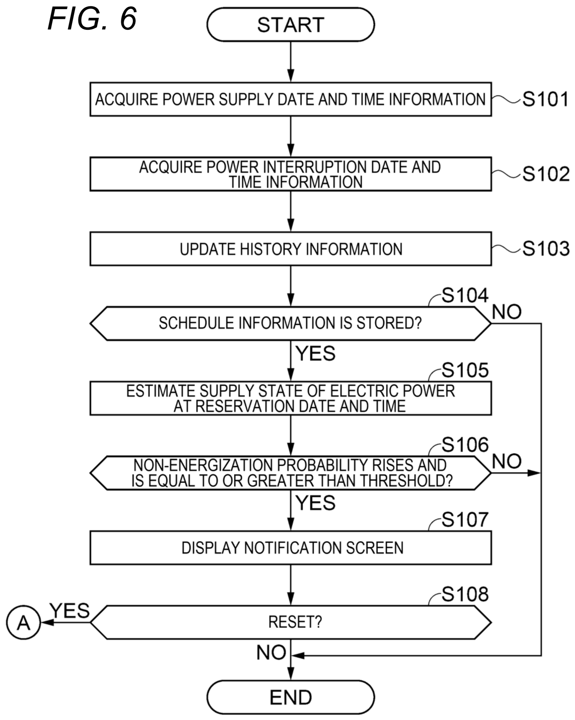

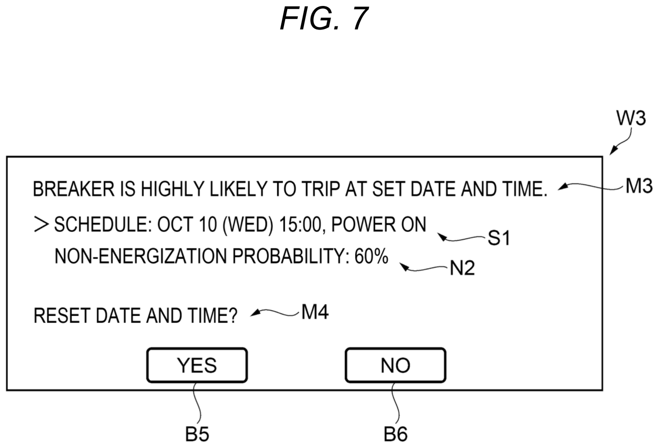

In a second embodiment, a schematic configuration of the projector 1 is the same as that in the first embodiment. However, an operation of the projector 1 at the start time is different from that in the first embodiment. FIG. 6 is a flowchart illustrating an operation of the projector 1 at the time when supply of electric power to the power supply 13 is started in the second embodiment. FIG. 7 is a diagram illustrating a notification screen W3 displayed when the supply of electric power to the power supply 13 is started in the second embodiment.

Steps S101 to S103 are the same as those in the first embodiment. That is, in step S103, the power manager 14 updates the history information 11b based on the power supply date and time information acquired in step S101 and the power interruption date and time information acquired in step S102.

In step S104, the controller 10 determines, based on information received from the schedule controller 15, whether schedule information set by the user is stored in the schedule controller 15. When determining that the schedule information is stored (step S104: YES), the controller 10 shifts the processing to step S105. When determining that the schedule information is not stored (step S104: NO), the controller 10 ends the flow.

In step S105, the power state estimator 31 estimates a supply state of electric power at the reservation date and time based on the latest history information 11b updated in step S103 and the schedule information. Specifically, the power state estimator 31 calculates a non-energization probability at the reservation date and time as in step S205 in the first embodiment. In step S105, the power state estimator 31 calculates a non-energization probability at the reservation date and time concerning all pieces of schedule information stored in the schedule controller 15. The latest history information 11b updated in step S103 is equivalent to the history information updated after the schedule information is acquired.

In step S106, the controller 10 determines whether, at any reservation date and time, the calculated non-energization probability has risen higher than that at the time of setting the schedule information and is equal to or larger than a predetermined threshold. When the non-energization probability has risen and is equal to or greater than the threshold at any reservation date and time (step S106: YES), the controller 10 shifts the processing to step S107 and, when the non-energization probability has not risen from an initial probability or is smaller than the threshold at all reservation dates and times (step S106: NO), the controller 10 ends the flow.

When the processing shifts to step S107, the controller 10 notifies the user that the projector 1 is highly likely to be in the non-energized state at the set reservation date and time. Specifically, the controller 10 generates the notification screen W3 illustrated in FIG. 7 and superimposes and displays the notification screen W3 as an OSD image. On the notification screen W3, a message M3 indicating that the projector 1 is highly likely to be in the non-energized state at the reservation date and time, information S1 indicating content of target schedule information, and numerical information N2 indicating the updated non-energization probability are displayed. The message M3 and the numerical information N2 are information indicating the estimation result by the power state estimator 31 and are equivalent to second estimation information obtained by estimating the supply state of electric power at the reservation date and time. The displaying the notification screen W3 including the message M3 and the numerical information N2 is equivalent to notifying the second estimation information.

Further, the notification screen W3 includes a YES button B5 and a NO button B6 together with a message M4 for inquiring whether to reset the reservation date and time. By operating the YES button B5 or the NO button B6, the user can designate whether to reset a schedule.

In step S108, the controller 10 determines whether to reset the schedule information. Specifically, the controller 10 determines whether the YES button B5 has been operated or the NO button B6 has been operated by the user. When the YES button B5 has been operated by the user (step S108: YES), the controller 10 shifts the processing to step S201 of the flow illustrated in FIG. 3 and causes the user to reset the schedule information. On the other hand, when the NO button B6 has been operated by the user (step S108: NO), the controller 10 ends the flow without resetting the schedule information.

As explained above, with the projector 1, the notification method, and the control program 11a in the present embodiment, the following effects can be obtained.

According to the present embodiment, the controller 10 estimates the supply state of electric power at the reservation date and time based on the history information 11b updated after the schedule information was acquired and the schedule information and displays the notification screen W3 indicating the estimation result. For this reason, the user can learn a supply state of electric power estimated according to the latest history information 11b.

### 3. Third Embodiment

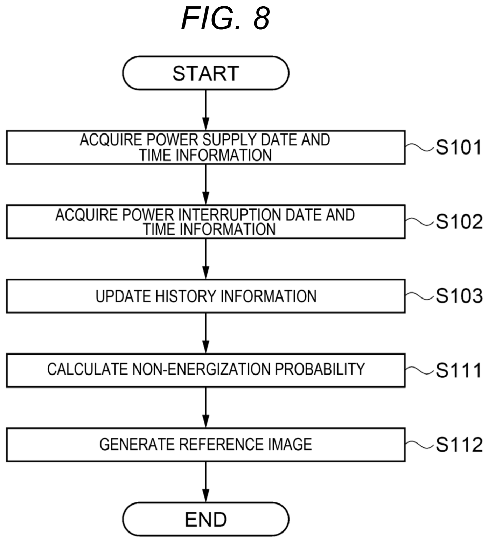

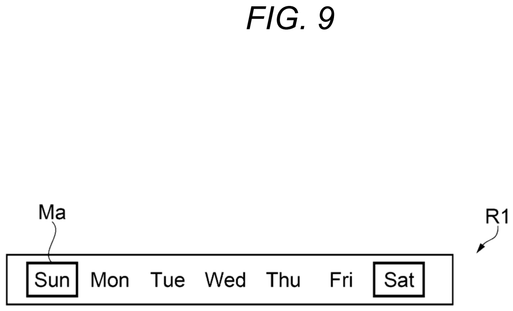

In a third embodiment, a schematic configuration of the projector 1 is the same as that in the first embodiment. However, operations of the projector 1 at the start time and the schedule setting time are different from those in the first embodiment. FIG. 8 is a flowchart illustrating an operation of the projector 1 at the time when supply of electric power to the power supply 13 is started in the third embodiment. FIGS. 9 to 11 are diagrams illustrating reference images R1, R2, and R3 generated by the controller 10.

Steps S101 to S103 are the same as those in the first embodiment. That is, in step S103, the power manager 14 updates the history information 11b based on the power supply date and time information acquired in step S101 and the power interruption date and time information acquired in step S102.

In step S111, based on the history information 11b, the controller 10 calculates a non-energization probability for each day of the week and a non-energization probability for each day of the week and time period.

The non-energization probability for each day of the week is a ratio of a time in which electric power was not supplied to a total time of a target day of the week in a predetermined period (for example, half a year) and is calculated for each day of the week. The non-energization probability for each day of the week and each time period is, when one day is divided into a plurality of time periods for each predetermined time (for example, three hours), a ratio of a time in which electric power was not supplied to a total time of a target time period of a target day of the week in a predetermined period and is calculated for each day of the week and each time period. The controller 10 stores, in the storage 11, the calculated non-energization probability for each day of the week and the calculated non-energization probability for each day of the week and each time period. The non-energization probability for each day of the week and the non-energization probability for each day of the week and each time period are examples of an indicator indicating a supply state of electric power.

In step S112, the controller 10 generates a plurality of reference images R1, R2, and R3 based on the calculated non-energization probability for each day of the week and the non-energization probability for each day of the week and time period and ends the processing. The reference images R1, R2, and R3 are images referred to by the user when schedule information is set on the schedule setting screen W1. Since the non-energization probability for each day of the week and the non-energization probability for each day of the week and each time period are calculated based on the history information 11b, the reference images R1, R2, and R3 can be regarded as images generated based on the history information 11b.

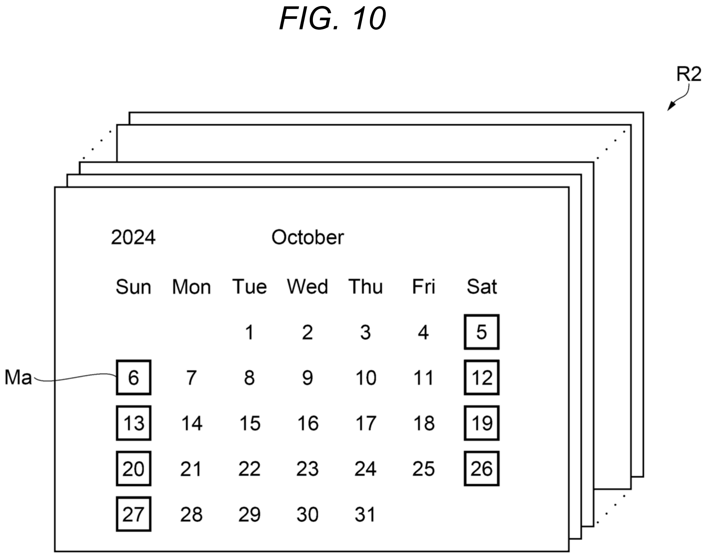

Specifically, the controller 10 generates the reference image R1 illustrated in FIG. 9 based on the calculated non-energization probability for each day of the week. As illustrated in FIG. 9, the reference image R1 is an image in which names of the days of the week are listed. A frame-shaped mark Ma is added to some days of the week. The mark Ma is added to, for example, a day of the week when the non-energization probability for each day of the week is equal to or greater than a predetermined threshold (for example, 80%). Similarly, the controller 10 generates the reference image R2 illustrated in FIG. 10 based on the non-energization probability for each day of the week. The reference image R2 is a calendar-like image in which dates for one month are arrayed. The controller 10 generates the reference image R2 for a predetermined number of months (for example, for twelve months) from the current month to the future. As in the reference image R1, in the reference image R2, for example, the mark Ma is added to days of the week when the non-energization probability for each day of the week is equal to or greater than the predetermined threshold.

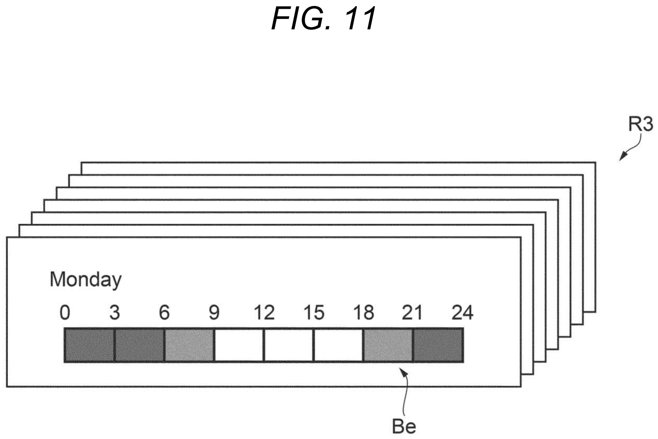

The controller 10 generates the reference image R3 illustrated in FIG. 11 for each day of the week based on the non-energization probability for each day of the week and each time period. That is, the controller 10 generates seven reference images R3 corresponding to the days of the week. The reference image R3 includes a band-like image Be that is long in the lateral direction. The reference image R3 is an image representing twenty-four hours in total. Time representing a time period is added to an upper part of the band-like image Be. The band-like image Be is divided into a plurality of regions for each time period. The regions are colored in different colors according to the non-energization probability for each day of the week and each time period calculated in step S111. For example, a region of a time period in which the non-energization probability is 80% or more is colored in a first color, a region of a time period in which the non-energization probability is 30% or more and less than 80% is colored in a second color, and a region of a time period in which the non-energization probability is less than 30% is colored in a third color.

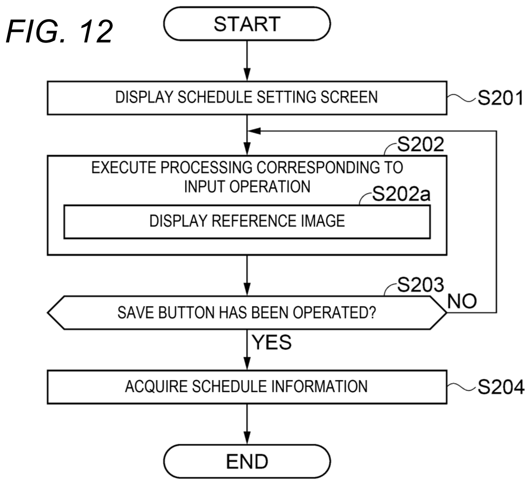

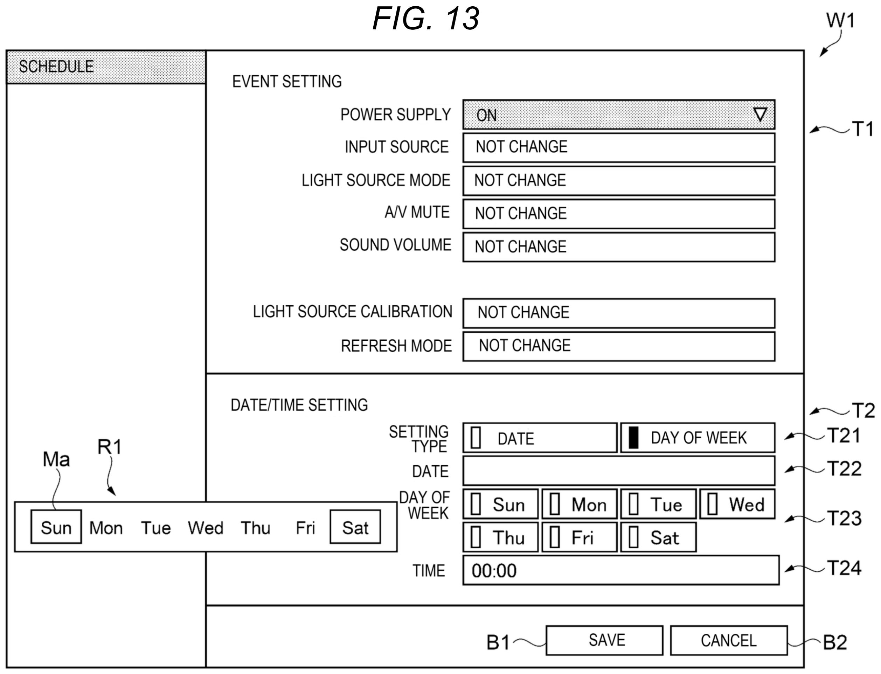

FIG. 12 is a flowchart illustrating an operation of the projector 1 at the time when the user sets the schedule information in the third embodiment and is a diagram illustrating a notification method of the projector 1. FIGS. 13 to 15 are diagrams illustrating the schedule setting screen W1 displayed when the schedule information is set in the third embodiment. When the user performs operation for setting the schedule information with the input operation unit 12, the controller 10 operates according to a flow illustrated in FIG. 12.

In step S201, the controller 10 displays the schedule setting screen W1. The schedule setting screen W1 is the same as that in the first embodiment.

In step S202, the controller 10 executes processing corresponding to input operation. Step S202 includes step S202a of displaying the reference images R1, R2, and R3 according to input operation of the user. As explained above, on the schedule setting screen W1, it is possible to select whether to designate a reservation date with a date or with a day of the week. When the user selects to designate the reservation date with a day of the week, the controller 10 displays the reference image R1 in the schedule setting screen W1 as illustrated in FIG. 13. The user can recognize, based on the presence or absence of the mark Ma in the reference image R1, a day of the week when a non-energization probability is high. That is, the user can designate a day of the week while referring to the reference image R1 that is based on the history information 11b.

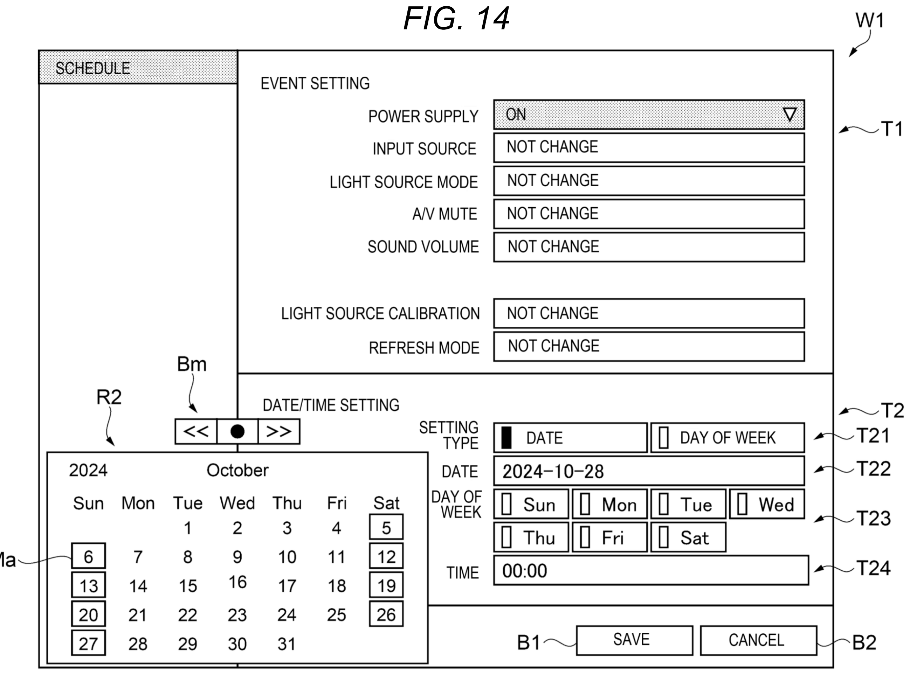

On the other hand, when the user selects to designate the reservation date with a date, the controller 10 displays the reference image R2 in the schedule setting screen W1 as illustrated in FIG. 14. In the vicinity of the reference image R2, a month selection button Bm for moving forward and backward a month to be displayed is disposed. The user can select the reference image R2 of a desired month by operating the month selection button Bm with the input operation unit 12. When the user operates the month selection button Bm, the controller 10 displays the reference image R2 of the selected month in the schedule setting screen W1. In this case as well, the user can recognize, based on the presence or absence of the mark Ma in the reference image R2, a day of the week when a non-energization probability is high. That is, the user can designate a date while referring to the reference image R2 that is based on the history information 11b.

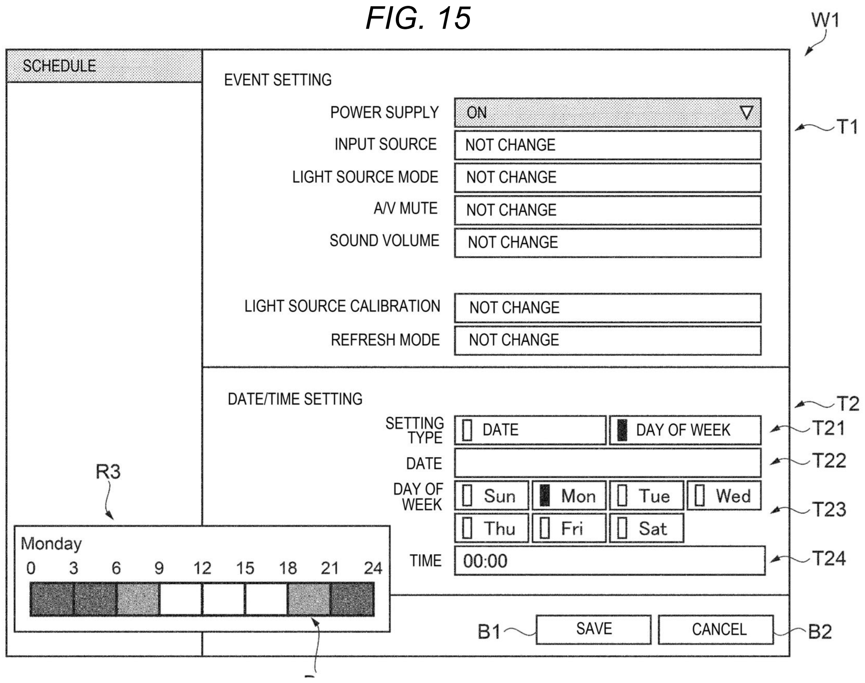

After the reservation date is designated, when the user operates the input operation unit 12 to select the time input section T24 of the timing setting section T2 on the schedule setting screen W1, the controller 10 displays the reference image R3 in the schedule setting screen W1 as illustrated in FIG. 15. Specifically, when the reservation date is designated with a date, the controller 10 displays the reference image R3 corresponding to a day of the week of the designated date. When the reservation date is designated with a day of the week, the controller 10 displays the reference image R3 corresponding to the designated day of the week. The user can recognize non-energization probabilities of time periods based on colors of the time periods in the reference image R3. That is, the user can designate reservation time with reference to the reference image R3 that is based on the history information 11b.

Referring back to FIG. 12, in step S203, the controller 10 determines whether the save button B1 has been operated by the user. When the save button B1 has been operated (step S203: YES), the controller 10 shifts the processing to step S204. When the save button B1 has not been operated (step S203: NO), the controller 10 returns the processing to step S202.

When the processing shifts to step S204, the controller 10 acquires schedule information that is based on content set on the schedule setting screen W1 and stores the schedule information in the schedule controller 15.

The reference images R1 and R2 to which the mark Ma is added according to the non-energization probability for each day of the week and the reference image R3 colored in a color corresponding to the non-energization probability for each day of the week and each time period are equivalent to energization reference information that is referred to when a reservation date and time is designated. The displaying the reference images R1, R2, and R3 is equivalent to notifying the energization reference information.

In the present embodiment, in the reference images R1 and R2, a part to which the frame-shaped mark Ma is added is equivalent to a first image indicating timing when the non-energization probability for each day of the week is equal to or greater than the threshold and a part to which the frame-shaped mark Ma is not added is equivalent to a second image indicating timing when the non-energization probability for each day of the week is smaller than the threshold. When the threshold of the non-energization probability for each day of the week and each time period is 30%, in the reference image R3, regions colored in the first color and the second color are equivalent to the first image indicating the timing when the non-energization probability is equal to or greater than the threshold and a region colored in the third color is equivalent to the second image indicating the timing when the non-energization probability is smaller than the threshold.

As explained above, with the projector 1, the notification method, and the control program 11a in the present embodiment, the following effects can be obtained.

According to the present embodiment, the reference images R1, R2, and R3 generated based on the history information 11b are displayed before the schedule information is set. For this reason, by referring to the reference images R1, R2, and R3, the user can prevent time when the projector 1 is less likely to be energized from being set as the reservation date and time.

According to the present embodiment, in the reference images R1 and R2, it is possible to discriminate, based on the presence or absence of the frame-shaped mark Ma, whether the non-energization probability for each day of the week is equal to or greater than the threshold. In the reference image R3, it is possible to discriminate the non-energization probability for each day of the week and each time period with a color of a region of the band-like image Be. For this reason, the user can visually grasp a supply state of electric power.

### 4. Modifications

Although the embodiments explained above are based on the configuration explained above, it is also possible to, for example, partially change or omit the configuration without departing from the gist of the present disclosure. The present embodiments and modifications explained below can be implemented in combination with each other within a technically consistent range. Hereinafter, the modifications are explained.

In the embodiments explained above, in order to acquire the power interruption date and time information, the date and time information is written in the memory in every predetermined time while the electric power is supplied. However, if the date and time information is overwritten at this time, it does not consume excessive memory. When the power manager 14 is operable for a predetermined time after the supply of electric power is interrupted, the power manager 14 may acquire, within the predetermined time, date and time information at that time point from the clock 15a as the power interruption date and time information. In this case, it is unnecessary to repeatedly write the date and time information in the memory while electric power is supplied to the power supply 13.

In the embodiments explained above, the order of executing step S101 and step S102 may be reversed. Timing when the history information 11b is updated is not limited to the power supply start time and may be any timing.

In the embodiments explained above, when the non-energization probability is calculated, a day on which the start or the interruption of the supply of electric power was performed at time different from normal time may be excluded from the calculation. For example, on a predetermined day of the week, a day on which one of time when the supply of electric power was started and time when the supply of electric power was interrupted is time outside a predetermined time range may be determined as a day different from a normal day and may be excluded from the calculation.

In the embodiments explained above, the power state estimator 31 calculates the non-energization probability as the indicator representing the supply state of electric power. However, the indicator representing the supply state of electric power is not limited to the non-energization probability. For example, the power state estimator 31 may calculate, as an indicator, an energization probability indicating a probability that electric power is supplied. In this case, in step S206, the controller 10 displays the notification screen W2 when the energization probability is smaller than the predetermined threshold. In addition, in the first embodiment, instead of the non-energization probability, the number of days on which electric power was not supplied at target time may be set as the indicator.

In the first embodiment explained above, in step S206, when the non-energization probability is smaller than the threshold, the flow is ended without notifying the user. However, when the non-energization probability is smaller than the threshold, a predetermined notification may be performed. For example, when the non-energization probability is less than 20%, it may be notified that the projector 1 is highly likely to be energized.

In the first embodiment and the second embodiment explained above, the estimation result of the power state estimator 31 is notified to the user by displaying the notification screens W2 and W3 as the OSD images. However, a way of notifying the user is not limited thereto. For example, the estimation result may be notified by voice or may be notified by lighting an indicator lamp.

In the embodiments explained above, on the schedule setting screen W1, the date on which the reserved operation is executed can be designated with the date or the day of the week. However, the reservation operation may be able to be designated to be executed every other day or may be able to be designated to be executed on a specific date of every month.

In the third embodiment explained above, the non-energization probability for each day of the week and each time period is notified to the user by the reference image R3. However, information that should be notified to the user is not limited thereto. For example, the latest power supply time and the latest power interruption time of a target day of the week may be notified or an average value of the power supply time and an average value of the power interruption time of the target day of the week within a predetermined period may be notified.

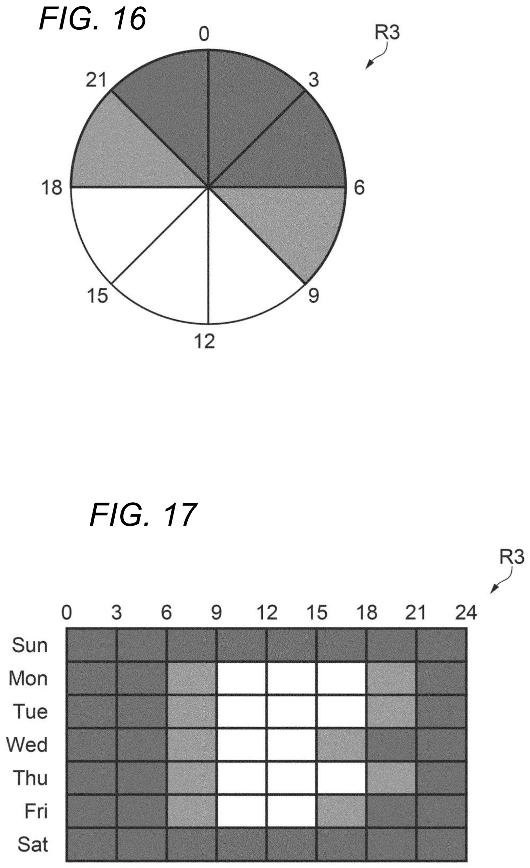

In the third embodiment explained above, the reference image R3 may be a pie chart-like image illustrated in FIG. 16. Instead of illustrating only the reference image R3 of the target day of the week, reference images R3 of a plurality of days of the week may be collectively displayed as illustrated in FIG. 17.

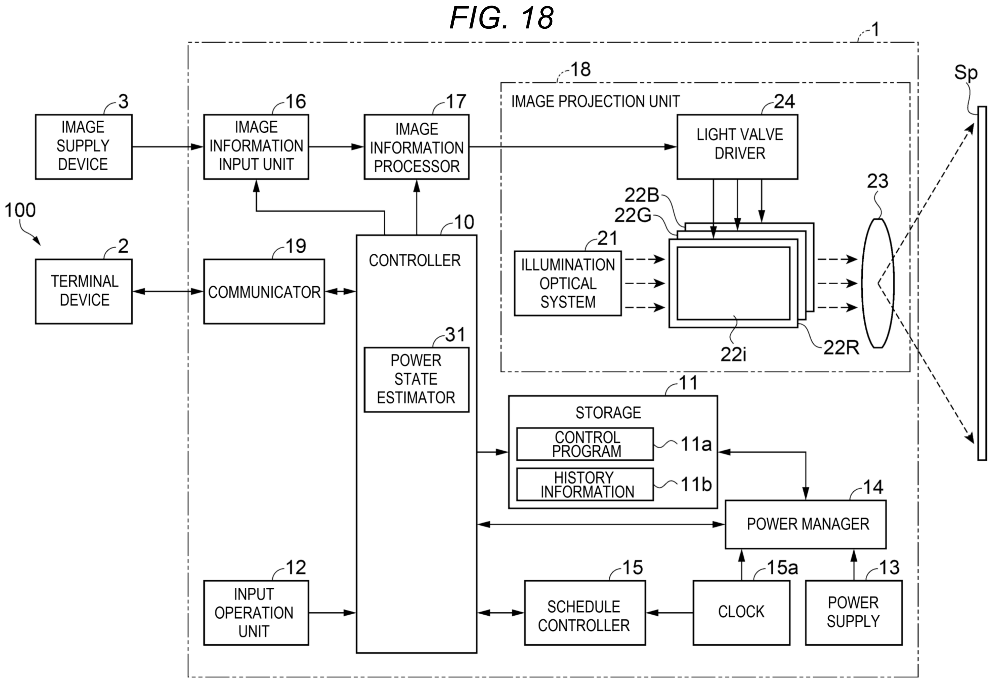

In the embodiments explained above, as illustrated in FIG. 18, the notification system 100 may include the projector 1 and a terminal device 2. The terminal device 2 is an information processing device such as a personal computer or a smartphone and is an example of a reservation device. The projector 1 includes a communicator 19 and communicates with the terminal device 2 through the communicator 19. The communicator 19 communicates with the terminal device 2 via a network such as a local area network (LAN). In the configuration explained above, the setting of the schedule information may be executed in the terminal device 2. In this case, the controller 10 of the projector 1 acquires the schedule information set in the terminal device 2 from the terminal device 2 via the communicator 19. The controller 10 notifies the estimation result by the power state estimator 31 such as the non-energization probability to the terminal device 2 via the communicator 19. Even in the configuration explained above, it is possible to obtain the same effects as those of the embodiments explained above. In this case, the estimation result notified to the terminal device 2 is equivalent to the first estimation information.

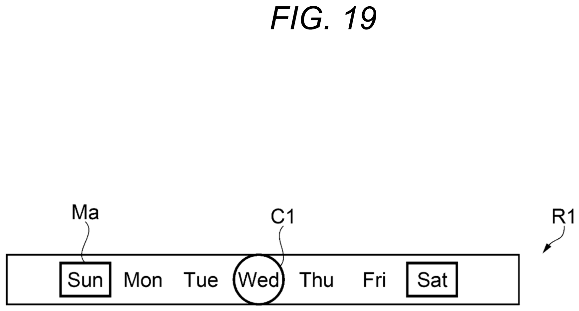

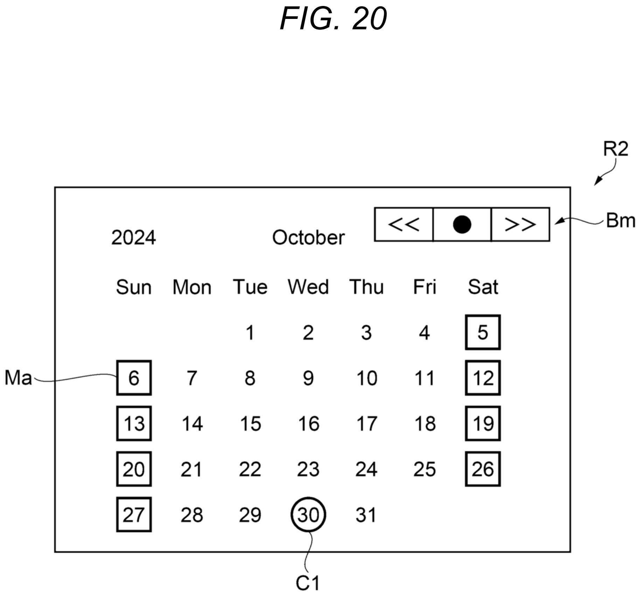

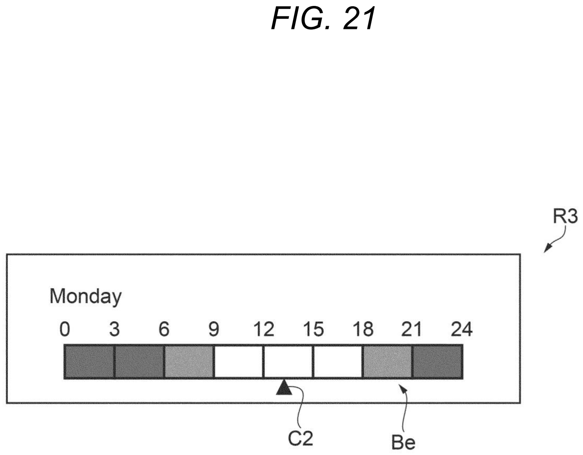

In the third embodiment explained above, the schedule information may be able to be set using the reference images R1, R2, and R3. For example, as illustrated in FIG. 19, when the reservation date is designated with a day of the week, a cursor C1 may be displayed in the reference image R1 to enable the day of the week to be designated by moving the cursor C1 with the input operation unit 12. Similarly, as illustrated in FIG. 20, when the reservation date is designated with a date, a month selection button Bm and the cursor C1 may be displayed in the reference image R2 to enable the date to be designated by selecting a month with the month selection button Bm and moving the cursor C1. As illustrated in FIG. 21, when reservation time is set, a cursor C2 may be displayed in the reference image R3 to enable the reservation time to be designated by moving the cursor C2. The cursor C1 and the cursor C2 are examples of an instruction image.

In the third embodiment explained above, all the days of the week are displayed in the reference image R1. It is possible to identify, according to the presence or absence of the mark Ma, whether the non-energization probability for each day of the week is equal to or greater than the threshold. Similarly, all the dates of the selected month are displayed in the reference image R2. It is possible to identify, according to the presence or absence of the mark Ma, whether the non-energization probability for each day of the week is equal to or greater than the threshold. All the time periods are displayed in the reference image R3. It is possible to identify, with a color, whether the non-energization probability for each day of the week and each time period is equal to or greater than the threshold. However, the present disclosure is not limited to the configurations explained above. For example, in the reference image R1, only days of the week when the non-energization probability for each day of the week is equal to or greater than the threshold may be displayed or only days of the week when the non-energization probability for each day of the week is smaller than the threshold may be displayed. Similarly, in the reference image R2, only dates on which the non-energization probability for each day of the week is equal to or greater than the threshold may be displayed or only dates on which the non-energization probability for each day of the week is smaller than the threshold may be displayed. In the reference image R3, only a time period in which the non-energization probability for each day of the week and each time period is equal to or greater than the threshold may be displayed or only a time period in which the non-energization probability for each day of the week and each time period is smaller than the threshold may be displayed. In other words, the reference images R1, R2, and R3 may include at least one of the first image and the second image explained above.

In the embodiments explained above, the power state estimator 31 may estimate the supply state of electric power using a learning model generated by machine learning.

In the embodiments explained above, the power receiving device is not limited to the projector 1 and may be another image display device or may be a device other than the image display device.

In the embodiments explained above, the electrical parameter is not limited to the electric power and only has to be an electrical parameter for driving the power receiving device. Other examples of the electrical parameter include an electric current, a voltage, and an electric charge.

### 5. Summary of the present disclosure

A summary of the present disclosure is appended below.

(Appendix 1) A notification method including: acquiring reservation information for reserving a first operation performed by a power receiving device at first timing in future; and notifying first estimation information obtained by estimating, based on history information indicating a history of a supply state of an electrical parameter for driving the power receiving device and the reservation information, a supply state of the electrical parameter at the first timing.

With the configuration of Appendix 1, the first estimation information obtained by estimating the supply state of the electrical parameter at the first timing based on the history information indicating the history of the supply state of the electrical parameter and the reservation information for reserving the first operation performed by the power receiving device at the first timing is notified. Accordingly, since a user can grasp the supply state of the electrical parameter to the power receiving device at the first timing, it is possible to prevent timing when the power receiving device is less likely to be energized from being set as the first timing.

(Appendix 2) The notification method described in Appendix 1, further including notifying second estimation information obtained by estimating the supply state of the electrical parameter at the first timing based on the history information updated after the reservation information was acquired and the reservation information.

With the configuration of Appendix 2, the second estimation information obtained by estimating the supply state of the electrical parameter at the first timing based on the history information updated after the reservation information is acquired and the reservation information is notified. For this reason, the user can learn a supply state of the electrical parameter estimated according to the latest history information.

(Appendix 3) The notification method described in Appendix 1 or 2, further including calculating, based on the history information and the reservation information, an indicator indicating the supply state of the electrical parameter at the first timing, wherein the first estimation information includes information indicating the indicator.

With the configuration of Appendix 3, the indicator indicating the supply state of the electrical parameter at the first timing is calculated and the first estimation information includes the information indicating the indicator. For this reason, the user can easily grasp the supply state of the electrical parameter.

(Appendix 4) The notification method described in Appendix 3, wherein the first estimation information is notified according to whether the indicator is equal to or greater than a predetermined threshold.

With the configuration of Appendix 4, since the first estimation information is notified according to whether the indicator indicating the supply state of the electrical parameter at the first timing is equal to or greater than the predetermined threshold, it is possible to effectively notify the user whether the indicator is equal to or greater than the threshold.

(Appendix 5) A notification method including: notifying energization reference information generated based on history information indicating a history of a supply state of an electrical parameter for driving a power receiving device; and acquiring reservation information for reserving a first operation performed by the power receiving device at first timing in future after the energization reference information was notified.

With the configuration of Appendix 5, the energization reference information generated based on the history information indicating the history of the supply state of the electrical parameter for driving the power receiving device is notified. For this reason, by referring to the energization reference information, a user can prevent timing when the power receiving device is less likely to be energized from being set as the first timing.

(Appendix 6) The notification method described in Appendix 5, wherein the energization reference information includes at least one of a first image indicating timing when an indicator indicating a supply state of the electrical parameter is equal to or greater than a threshold and a second image indicating timing when the indicator is smaller than the threshold.

With the configuration of Appendix 6, since whether the indicator indicating the supply state of the electrical parameter is equal to or greater than the threshold is notified by the image, the user can visually grasp timing when the power receiving device is less likely to be energized.

(Appendix 7) A notification system including: acquiring, from a reservation device, reservation information for reserving a first operation performed by a power receiving device at first timing in future; and notifying, to the reservation device, first estimation information obtained by estimating, based on history information indicating a history of a supply state of an electrical parameter for driving the power receiving device and the reservation information, a supply state of the electrical parameter at the first timing.

With the configuration of Appendix 7, the first estimation information obtained by estimating the supply state of the electrical parameter at the first timing based on the history information indicating the history of the supply state of the electrical parameter and the reservation information for reserving the first operation performed by the power receiving device at the first timing is notified. Accordingly, since a user can grasp the supply state of the electrical parameter to the power receiving device at the first timing, it is possible to prevent timing when the power receiving device is less likely to be energized from being set as the first timing.

(Appendix 8) A non-transitory computer-readable storage medium storing a program for causing a computer to execute: acquiring reservation information for reserving a first operation performed by a power receiving device at first timing in future; and notifying first estimation information obtained by estimating, based on history information indicating a history of a supply state of an electrical parameter for driving the power receiving device and the reservation information, a supply state of the electrical parameter at the first timing.

With the configuration of Appendix 8, the first estimation information obtained by estimating the supply state of the electrical parameter at the first timing based on the history information indicating the history of the supply state of the electrical parameter and the reservation information for reserving the first operation performed by the power receiving device at the first timing is notified. Accordingly, since a user can grasp the supply state of the electrical parameter to the power receiving device at the first timing, it is possible to prevent timing when the power receiving device is less likely to be energized from being set as the first timing.

## Claims

1. A notification method comprising:
acquiring reservation information for reserving a first operation performed by a power receiving device at first timing in future; and
notifying first estimation information obtained by estimating, based on history information indicating a history of a supply state of an electrical parameter for driving the power receiving device and the reservation information, a supply state of the electrical parameter at the first timing.

2. The notification method according to claim 1, further comprising notifying second estimation information obtained by estimating the supply state of the electrical parameter at the first timing based on the history information updated after the reservation information was acquired and the reservation information.

3. The notification method according to claim 1, further comprising calculating, based on the history information and the reservation information, an indicator indicating the supply state of the electrical parameter at the first timing, wherein
the first estimation information includes information indicating the indicator.

4. The notification method according to claim 3, wherein the first estimation information is notified according to whether the indicator is equal to or greater than a predetermined threshold.

5. A notification method comprising:
notifying energization reference information generated based on history information indicating a history of a supply state of an electrical parameter for driving a power receiving device; and
acquiring reservation information for reserving a first operation performed by the power receiving device at first timing in future after the energization reference information was notified.

6. The notification method according to claim 5, wherein the energization reference information includes at least one of a first image indicating timing when an indicator indicating a supply state of the electrical parameter is equal to or greater than a threshold and a second image indicating timing when the indicator is smaller than the threshold.

7. A notification system comprising:
acquiring, from a reservation device, reservation information for reserving a first operation performed by a power receiving device at first timing in future; and
notifying, to the reservation device, first estimation information obtained by estimating, based on history information indicating a history of a supply state of an electrical parameter for driving the power receiving device and the reservation information, a supply state of the electrical parameter at the first timing.

8. A non-transitory computer-readable storage medium storing a program for causing a computer to execute:
acquiring reservation information for reserving a first operation performed by a power receiving device at first timing in future; and
notifying first estimation information obtained by estimating, based on history information indicating a history of a supply state of an electrical parameter for driving the power receiving device and the reservation information, a supply state of the electrical parameter at the first timing.
